# EUROPÄISCHE PATENTSCHRIFT

(11) **EP 1 288 273 B1**
(45) Veröffentlichungstag und Bekanntmachung des Hinweises auf die Patenterteilung: **30.06.2004**
(21) Anmeldenummer: 02023786.3
(22) Anmeldetag: 10.01.2001
(51) Int. Cl.: C09K 3/10, C09D 157/00, C09J 157/00

(54) **Einkomponentige Dichtmasse auf Basis einer Polyacrylatdispersion**
Single component sealing composition based on a polyacrylate dispersion
Etanchéités monocomposantes à base de dispersion acrylique

(30) Priorität: 12.01.2000 DE 10000940
(43) Veröffentlichungstag der Anmeldung: 05.03.2003
(62) Teilanmeldung aus: 01900414.2
(73) Patentinhaber: Silu Verwaltung AG, 6045 Meggen (CH)
(72) Erfinder: Sieber, Marco, 6048 Horw (CH); Sieber, Reto, 6019 Sigigen (CH); Vandeweerdt, Patrick, 6331 Hünenberg (CH)
(74) Vertreter: Altenburg, Udo, Dipl.-Phys.

(56) Entgegenhaltungen:
- EP-A- 0 273 605
- EP-A- 0 712 877
- WO-A-97/06005
- DE-A- 3 247 337
- DE-A- 19 617 737
- LUCKE H: "Kleb- und Dichtstoffe Teil 2" ADHASION, BERTELSMANN FACHZEITSCHRIFTEN GMBH. BERLIN, DE, Bd. 85, Nr. 7/8, 1985, Seiten 13-16, XP002163877
- PATENT ABSTRACTS OF JAPAN vol. 007, no. 069 (C-158), 23. März 1983 (1983-03-23) & JP 58 002375 A (SANYO KOKUSAKU PULP KK;OTHERS: 01), 7. Januar 1983 (1983-01-07)

## Beschreibung

Die Erfindung betrifft eine einkomponentige Dichtmasse auf Basis einer Dispersion von Polyacrylaten, wobei die Dichtmasse im Naßzustand im wesentlichen frei von flüchtigen organischen Verbindungen ist und im Trockenzustand selbstklebend ist. Weiterhin betrifft die Erfindung die Herstellung und Verwendung dieser Dichtmasse sowie mit dieser Dichtmasse beschichtete Materialien.

Das Verbinden von Materialien wird allgemein unterteilt in Kleben und Dichten. Das Abdichten von Materialien ist eine Anwendung, die in allen Branchen von der metallverarbeitenden Industrie bis zum Baubereich angetroffen wird. Dichtstoffe haben die Aufgabe, Bewegungen, die zwischen z.B. Bauteilen entstehen, aufzufangen und die Fugen zu schließen. Fugen müssen abgedichtet werden, damit keine Feststoffe, Flüssigkeiten oder Gase am falschen Ort eindringen können. Dagegen stehen bei Klebstoffen die Herstellung eines Verbundes und dadurch ihre Hafteigenschaften und Festigkeit im Vordergrund. Man kann klebende und dichtende Massen zum Verbinden von Substraten nach ihrer Festigkeit differenzieren: fest, elastisch oder plastisch. Bei abnehmender Zugscherfestigkeit geht die Dehnung der Masse durch ein Maximum, wobei die Masse von fest über elastisch in den plastischen Bereich übergeht. Die Festigkeit der Masse bestimmt, ob von einem Klebstoff (fest bis elastisch) oder einer Dichtmasse (elastisch bis plastisch) gesprochen wird. So muß ein Klebstoff eine gewisse Zugfestigkeit besitzen, damit strukturelle Verklebungen erfolgreich ausgeführt werden können. Dagegen werden bei Dichtmassen grundsätzlich Massen mit elastischen Eigenschaften verwendet, die ein bestimmtes Ausdehnungsvermögen haben, um Ausdehnungen und Schrumpfungen auffangen zu können, so daß keine Risse oder Brüche und damit Undichtigkeiten entstehen. Die bekannten Dichtmassen haben die Eigenschaft, daß sie nach ihrem Auftrag aushärten, so daß kein Schmutz an der Oberfläche haften bleibt.

Im Baubereich sind zur Abdichtung von Polyolefin-Materialien, z.B. Polyethylen-Folien, Dichtmassen bekannt, die lösungsmittelhaltig sind, und damit flüchtige organische Verbindungen enthalten. Aufgrund von Umweltaspekten und auch wegen ihres starken Geruchs stoßen derartige Dichtungsmassen auf immer größeren Widerstand und neuere Entwicklungen zielen auf im wesentlichen lösungsmittelfreie Dichtmassen ab.

Somit bestand die der Erfindung zugrundeliegende Aufgabe in der Bereitstellung einer Dichtmasse, die möglichst wenig flüchtige organische Verbindungen enthält und eine wirksame Abdichtung von Polyolefin-Materialien erreicht.

Zur Lösung dieser Ausgabe wird eine einkomponentige Dichtmasse gemäß Anspruch 1 vorgeschlagen.

Somit betrifft die Erfindung eine einkomponentige Dichtmasse gemäß Anspruch 1 und ein System gemäß Anspruch 18. Außerdem betrifft die Erfindung die Herstellung der erfindungsgemäßen Dichtmasse und ihre Verwendung zum Anschließen und/oder Abdichten von Materialien, insbesondere von Polyolefin-Materialien, sowie mit der erfindungsgemäßen Dichtmasse beschichtete Materialien. Bevorzugte Ausfiihrungsformen der Erfindung sind in den Unteransprüchen und der nachfolgenden Beschreibung definiert.

Die erfindungsgemäße Dichtmasse ist im Trockenzustand selbstklebend. Die Klebrigkeit der Oberfläche der Dichtmasse kann gemäß Test Methods for Pressure-Sensitive Adhesives, 6^{th} edition, Pressure sensitive tape council, Itasca III mit einer laufenden Kugel gemessen werden, deren Weg weniger als 30 cm, bevorzugt weniger als 20 cm, beträgt. Die erfindungsgemäße Dichtmasse ist grundsätz - lich nach dem Trocknen immer selbstklebend, d.h. es kann jederzeit, auch nach der Trocknung, eine Verklebung erreicht werden und die selbstklebende Eigenschaft bleibt bestehen.

Besonders geeignete Polyacrylate sind Vinylpolymere auf Basis von wenigstens Acrylat- und/oder Methacrylat-Monomeren, insbesondere unter anderem wegen deren Alterungsbeständigkeit. Vorzugsweise enthalten diese Acrylat- und/oder Polymethacrylat-basierten Polymeren, wenn sie weitere Monomere umfassen, Vinyl-basierte Monomere, z.B. Vinylacetat, Vinylether, Vinylhalogenide oder Vinylaromatische Verbindungen, z.B. Styrol oder Vinylbenzol, oder aliphatische Monomere, z.B. Ethen, Butadien oder Propen. Besonders geeignet sind Polyacrylate und/oder Polymethacrylate mit Estergruppen mit 1 bis 15 C-Atomen. Am meisten bevorzugt werden Polyacrylate auf Basis von 2-Ethylhexylacrylat und/oder Butylacrylat verwendet. Erfindungsgemäß geeignete Polyacrylate werden durch dem Fachmann bekannte Dispersionspolymerisation hergestellt. So enthalten kommerziell erhältliche Polyacrylat-Dispersionen üblicherweise 30 bis 60 Gew.-% Wasser und 40 bis 70 Gew.-% Polyacrylate sowie ggf. Additive.

Die Dichtmasse enthält im Naßzustand zweckmäßigerweise in einem wäßrigen Medium dispergierte Polyacrylate. Erfindungsgemäß bevorzugte Dichtmassen enthalten im Naßzustand 15 bis 90 Gew.-%, vorzugsweise 25 bis 80 Gew.-%, insbesondere 30 bis 50 Gew.-% Polyacrylate und 5 bis 50 Gew.-%, vorzugsweise 5 bis 40 Gew.-%, insbesondere 15 bis 30 Gew.-%, wäßriges Medium, jeweils bezogen auf 100 Gew.-% Dichtmasse im Naßzustand, wobei der Rest jeweils Additive sind. Das wäßrige Medium enthält Wasser und ggf. wasserlösliche Additive. Diese Additive werden u.a. zugesetzt, um die Frostbeständigkeit der Dichtmasse zu verbessern. Je nach zugegebener Menge, die vom Fachmann leicht bestimmt werden kann, kann die Gefriertemperatur auf bis zu -20°C herabgesetzt werden. Vorzugsweise handelt es sich hierbei um wasserlösliche, anorganische Salze, insbesondere Natriumchlorid, Kaliumchlorid, Calciumchlorid oder Natriumsulfat, oder um wasserlösliche Lösungsmittel, insbesondere Methanol, Ethanol, Propanol oder Aceton, oder um wasserlösliche hochsiedende und/oder weichmachende Verbindungen, insbesondere Ethylenglycol oder Propylenglycol. Die genannten wasserlöslichen Additive können allein oder als Gemische davon verwendet werden.

Die Dichtmasse kann Additive ausgewählt aus anorganischen Füllstoffen; organischen Füllstoffen, insbesondere Weichmachern, Tackifiern, oligomeren Füllstoffen, polymeren Füllstoffen und Rheologie-Modifikatoren, wie z.B. Verdickern oder Thixotropiermitteln; Vernetzern; Haftvermittlern; Stabilisatoren; Entschäumern; Tensiden; Trocknungsadditiven; flüchtigen organischen Verbindungen (VOC); und den oben genannten wasserlöslichen Additiven enthalten. Die Additive können allein oder als Gemische davon verwendet werden. Sie liegen in den folgenden Mengen vor, jeweils bezogen auf 100 Gewichtsteile Dichtmasse im Naßzustand: 0 bis 80 % Gewichtsteile anorganische und/oder organische Füllstoffe; 0 bis 60 Gewichtsteile Weichmacher; 0 bis 80 Gewichtsteile Tackifier; 0 bis 80 Gewichtsteile oligomere und/oder polymere Füllstoffe; 0 bis 20 Gewichtsteile Rheologie-Modifikatoren; 0 bis 15 Gewichtsteile Vernetzer; 0 bis 10 Gewichtsteile Haftvermittler; 0 bis 15 Gewichtsteile Stabilisatoren; 0 bis 10 Gewichtsteile Entschäumer; 0 bis 10 Gewichtsteile Tenside; 0 bis 20 Gewichtsteile Trocknungsadditive; und 0 bis 10 Gewichtsteile flüchtige organische Verbindungen (VOC), vorzugsweise 0 bis 5 Gewichtsteile flüchtige organische Verbindungen (VOC), insbesondere 0 bis 3 Gewichtsteile flüchtige organische Verbindungen (VOC). Bei den jeweiligen Additiven handelt es sich um dem Fachmann auf diesem Gebiet bekannte

Additive, die jeweils keinen besonderen Beschränkungen unterliegen. Bevorzugte anorganische Füllstoffe sind gefälltes oder natürliches Bariumsulfat, Titandioxid, gefälltes oder natürliches Calciumcarbonat (z.B. Kreide), gefälltes oder natürliches Kaolin, Talkum, Magnesium- oder Aluminiumhydroxid (letztere Hydroxide erlauben eine Einstellung der Brandklasse), Zinkoxid, Zirkoniumsalze, Glaskugeln oder Mikrohohlkugeln aller Art. Bevorzugte organische Füllstoffe sind z.B. Harze auf Kohlenwasserstoff- oder Kolophoniumbasis, Tallharz, Balsamharz, Terpene, Oligomere, wie z.B. Butylene, Acrylate oder andere Vinyl-basierte Moleküle mit einem relativ niedrigen Molekulargewicht, Urethane oder Ester mit relativ niedrigem Molekulargewicht oder polymere Weichmacher auf Polyesterbasis, z.B. Benzoflex. Als organische Füllstoffe sind auch polymere Füllstoffe geeignet, wie z.B Schlagzähmodifikatoren, Kunststoffasern oder Kunststoffpulver aus z.B. Polyacrylaten, Polystyrol, Polyester, Polyamid, Polyurethan, Polyvinylchlorid, Polyolefinen, Polyvinylacetat, Polyisopren oder Poly(iso)butylen, sowie Blockcopolymere davon. Bei den Weichmachern handelt es sich gemäß DIN 55945 um flüssige oder feste indifferente organische Substanzen mit geringem Dampfdruck. Aufgrund ihres Löse- und Quellvermögens verringern sie die Härte der Polyacrylate und ändern sein Haftvermögen. Geeignete Weichmacher sind z.B. Phthalate, Adipate, Citrate, Phosphate, Trimellithsäure oder Sulfonsäure. Bei den Tackifiern handelt es sich vorzugsweise um Kolophonium- oder Kohlenwasserstoff-basierte Harze. Bevorzugte Vernetzer sind Metallsalze, wie Zinkacetat, Magnesiumacetat oder Zirkoniumsalze; Aziridine, Glyoxalate oder Triethylenglykoldivinylether. Bevorzugte Rheologie-Modifikatoren sind Polyurethan-Verdicker, Acrylat-Verdicker, Cellulose-Verdicker, Polyvinylalkohol-Verdicker, Silikate, Vinylether-/Maleinsäureanhydrid oder Polyethylenoxid. Als Haftvermittler sind bevorzugt pH-Regler (z.B. Acrylsäure); Silane, Aziridine oder Fluorbasierte Mittel. Bevorzugte Stabilisatoren sind zur Erhöhung der Temperaturstabilität sterisch gehinderte Phenole, wie z.B. Irganox 110, Antioxidant 330 oder Cyanox 2246, und zur Erhöhung der UV-Beständigkeit sterisch gehinderte Phenole und/oder sterisch gehinderte Amine, wie Irganox 1076 oder 1010, Tinuvin P, Tinovin 326 oder 770, oder Antioxidant 330, oder modifizierte Titandioxi-Bevorzugte Entschäumer sind Entschäumer auf Silicon-, Polyethylenoxid- oder Paraffinölbasis. Bevorzugte Tenside sind Netzmittel, wie anionische oder kationische Netzmittel oder Netzmittel auf F- oder Si-Basis, wobei besonders bevorzugte Netzmittel auf S. 152 und 516 in Handbook of Coatings Additives, Leonard J. Calbo, 1987, Marcel Dekker Inc., 0-8247-7561-9, beschrieben sind. Als Trocknungsadditive eignen sich Zirkoniumderivate. Bei den flüchtigen organischen Verbindungen (VOC) handelt es sich im Sinne der Erfindung um Verbindungen mit einem Dampfdruck von mindestens 0,1 mbar bei 20°C und einem Siedepunkt von höchstens 240°C bei 1013,25 mbar. Diese werden unterteilt in Lösungsmittel mit einem Siedepunkt unterhalb 150°C sowie Hochsieder mit einem Siedepunkt zwischen 150 und 240°C, so wie es auch in der Verordnung über die Lenkungsabgabe auf flüchtige organische Verbindungen (VOCV 814.018), einem Teil des schweizerischen Umweltschutzgesetztes (USG aus 1997) im ersten Abschnitt unter Art. 1 (Begriff) definiert ist. Bevorzugt werden 0 bis 3 Gewichtsteile flüchtige organische Verbindungen, stärker bevorzugt 0,1 bis 0,5 Gewichtsteile flüchtige organische Verbindungen, jeweils bezogen auf 100 Gewichtsteile Dichtmasse im Naßzustand, eingesetzt. Es besteht jedoch auch die Möglichkeit, höhere Mengen an VOC einzusetzen, so wie sie weiter oben definiert sind. Als VOC besonders geeignete Lösungsmittel sind Ethanol, Propanol oder Ethylacetat. Als VOC besonders geeignete Hochsieder sind Glykole, beispielsweise Ethylenglycol oder Propylenglycol. Daneben kann die erfindungsgemäße Dichtmasse noch weitere übliche Zusatzstoffe enthalten, z.B. Biozide (Konservierungsstoffe), wie sie in Handbook of Coatings Additives, Leonard J. Calbo, 1987, Marcel Dekker Inc., 0-8247-7561-9, auf Seite 195-197 definiert sind, oder Farbstoffe.

Stabilisatoren werden insbesondere dann eingesetzt, falls Acrylat-basierte Vinylpolymere mit aliphatischen Monomeren, wie z.B. Vinylacetat oder Butadien, oder aromatischen Monomeren, z.B. Styrol oder Vinylbenzol, verwendet werden. Darüber hinaus ist es bei Verwendung von nicht-hydrierten Tackifiem bevorzugt, eine zusätzliche Menge an Stabilisatoren zuzusetzen, um die gewünschte Alterungsbeständigkeit zu erreichen. Den Tackifiem, oligomeren Füllstoffen und weiteren organischen Füllstoffen kommt die Aufgabe zu, die Selbstklebrigkeit, Kohäsion und Wasserbeständigkeit der Dichtmasse zu verbessern. Durch Wahl der geeigneten Füllstoffe und Vernetzer kann vom Fachmann eine optimale Kohäsion erreicht werden. Diese sollte im Baubereich bei 70°C noch ausreichend sein. Der Fachmann kann hierbei die optimale Kohäsion durch entsprechende Abstimmung der Kettenlänge der Polyacrylate, die Menge und Qualität der Füllstoffe und Vernetzer abstimmen. Da die Kohäsionsoptimierung immer im Widerstreit mit der Adhäsion steht, muß die Kohäsion so gewählt werden, daß sie nicht höher eingestellt wird, als die Adhäsion es zuläßt.

Die Additive liegen in einer Menge von 0 bis 80 Gewichtsteilen, insbesondere von 10 bis 70 Gewichtsteilen, am meisten bevorzugt von 30 bis 60 Gewichtsteilen vor, jeweils bezogen auf 100 Gewichtsteile Dichtmasse im Naßzustand. Die oben genannten wasserlöslichen zur Verbesserung der Frostbeständigkeit zugesetzten Additive liegen vorzugsweise in einer Menge von 0 bis 30 Gewichtesteilen, insbesondere von 0 bis 15 Gewichtsteilen vor, während die anderen Additive vorzugsweise in einer Menge von 0 bis 70, insbesondere von 20 bis 50 Gewichtsteilen, vorliegen, jeweils bezogen auf 100 Gewichtsteile Dichtmasse im Naßzustand.

Die Viskosität der Dichtmasse im Naßzustand beträgt vorzugsweise nach ISO 2555 wenigstens 50 Pa·s bei 23°C bei Bestimmung nach Brookfield Typ A mit einer Spindel 6 bei 10 U/min. Bevorzugt beträgt die Viskosität bei 23°C wenigstens 200 Pa·s, stärker bevorzugt wenigstens 350 Pa·s, jeweils bei Bestimmung nach Brookfield Typ A mit einer Spindel 7 bei 10 U/min. Die Obergrenze der Viskosität wird dadurch bestimmt, daß die Dichtmasse noch handhabbar ist. Die geeignete Viskosität kann vom Fachmann im Rahmen fachüblicher Versuche durch Verwendung der oben genannten Rheologie-Modifikatoren und/oder der anderen oben genannten Additiven eingestellt werden. Rheologie-Modifikatoren können auch zugesetzt werden, um die Handhabung der Dichtmasse zu erleichtern. Mit Hilfe von Rheologie-Modifikatoren, wie z.B. Verdickem oder Thixotropiermitteln, wird eine standfeste, fließfähige Dichtmasse erhalten, die sich aus einer Kartusche oder einem Kunststoffbeutel leicht herauspressen und verarbeiten läßt. Gleichzeitig erhöhen diese Modifikatoren die Sofortfestigkeit, wodurch die Dichtmasse das Gewicht z.B. eines Polyolefinmaterials tragen kann. Die Benetzung des abzudichtenden Materials wird mit Hilfe von Tensiden erreicht. Da diese eine Schäumung verursachen können, können Entschäumer zugemischt werden. Eine Repulsion der Dichtmasse auf dem abzudichtenden Material kann wiederum durch eine Erhöhung der Viskosität mit Verdickem verhindert werden.

Erfindungsgemäß umfaßt die Dichtmasse im Trockenzustand wenigstens eine Phase, die vorliegend auch Bindematrix genannt wird. Diese Phase enthält die Polyacrylate und ggf. darin lösliche Additive. Die Glasübergangstemperatur T_{g} der Bindematrix liegt unter +10°C, vorzugsweise zwischen -80 und +10°C, insbesondere zwischen -80 und -40°C, wobei die Glasübergangstemperatur T_{g} mittels DSC *(Differential Scanning Calorimetry)* wie folgt bestimmt wird. Eine Probe von etwa 30 mg wird zuerst bei -10°C/min auf -120°C abgekühlt und anschließend bei 10°C/min auf 40°C erwärmt. Bei der Aufwärmung ergibt sich ein Sprung in der Cp-Kurve (Cp bedeutet Wärmekapazität), dessen Mittelpunkt die Glasübergangstemperatur T_{g} definiert. Dieser Mittelpunkt kann auch durch Differenzieren der Kurve ermittelt werden. Die Verwendung von Weichmachern, oligomeren Füllstoffen und/oder Tackifiem erlaubt auch die Verwendung von Polyacrylaten mit einer höheren Glasübergangstemperatur als 10°C, da über die genannten Additive die Glasübergangstemperatur der Bindematrix auf den gewünschten Wert gesenkt werden kann. Allgemein bestimmt sich die Anzahl der Phasen nach der Zusammensetzung der Dichtmasse. Neben der Bindematrix umfaßt diese vorzugsweise wenigstens eine weitere Phase, insbesondere zwei weitere Phasen. Diese weitere(n) Phase(n) enthält (enthalten) Wasser und in der Bindematrix nicht gelöste Additive.

Erfindungsgemäß bezeichnet der Begriff Trockenzustand den Zustand, den die Dichtmasse 1 Stunde nach ihrem Auftrag auf Si-Papier bei einem Auftragsgewicht von etwa 300 g/m² (trocken) bei 70°C erreicht. Der Begriff Naßzustand bezeichnet vorliegend den Zustand, in dem die Dichtmasse nach ihrer Herstellung erhalten wird und der bei ihrer Aufbewahrung, z.B. in einem Kunststoffbeutel oder einer Kartusche, erhalten bleibt.

Die erfindungsgemäße Dichtmasse hat im Trockenzustand eine Schälhaftung von wenigstens 5 N/25 mm, vorzugsweise von 5 bis 50 N/25 mm, jeweils bei Bestimmung gemäß DIN EN (Europäische Norm) 1939 zwischen 5 und 50°C auf beispielsweise Polyolefinmaterialien. Die Dichtmasse besitzt diese Schälhaftung nicht nur auf Polyolefin-Materialien, sondern auch auf allen anderen Materialien, z.B. Papieren, Vliesen, Polyamiden oder Polyestern, außer auf Materialien mit einer sehr tiefen Oberflächenspannung wie silikonisierte und fluorisierte Oberflächen. Die Schälhaftung stellt eine wiederholte Schälhaftung dar. Diese Schälhaftung kann durch eine gezielte Einstellung der Polarität der Polyacrylate erreicht werden, die vom Fachmann im Rahmen fachüblicher Versuche leicht durchgeführt werden kann. Bei einer zu hohen Polarität des Polyacrylats ist die Affinität für ein Polyolefin-Material zu niedrig, während bei zu geringer Polarität des Polyacrylats zu wenig Doppelbindungen vorhanden sind, um genügend Van-der-Waals-Wechselwirkungen mit einem Polyolefin-Material zu erzielen. Hierbei muß die Dichtmasse so formuliert werden, daß eine höhere Adhäsion (Haftung) auf polyolefinischen Materialien als eine Kohäsion (innere Festigkeit) der Dichtmasse erreicht wird. Die Polarität des Polyacrylats kann durch die Wahl der Monomere eingestellt werden. Acrylatmonomere mit kurzen Estergruppen, z.B Methyl- oder Ethylgruppen, haben eine hohe Polarität, während Acrylatmonomere mit langen Estergruppen, z.B. Stearylacrylate, eine niedrigere Polarität haben. Die Polarität eines Polyacrylats kann weiterhin optimiert werden durch Einsatz von Vinyl-basierten Verbindungen, z.B. Vinylacetat, Vinylether, Vinylhalogeniden oder Vinyl-aromatischen

Verbindungen, z.B. Styrol. Durch Zugabe von Divinyl- oder Tervinylcomonomeren kann die Kohäsion, molare Masse und das Schubmodul des Polymers geregelt werden.

Der dynamische Schubmodul G' der Dichtmasse im Trockenzustand bei Bestimmung gemäß untenstehender Meßmethode liegt vorzugsweise im Bereich von 5·10⁵ Pa bis 5·10³ Pa bei 25°C, insbesondere niedriger als 5·10⁵ Pa bei Temperaturen tiefer als -10°C, bevorzugt tiefer als -25°C, und höher als 5·10³ Pa bei Temperaturen höher als 60°C, bevorzugt höher als 80°C, jeweils bei Bestimmung gemäß folgender Methode. Im Sinne der vorliegenden Erfindung handelt es sich bei dem Schubmodul G' um ein Elastizitätsmodul (oder Speichermodul), das an einem Rheometer-Platte-Platte-System mit einer Frequenz von 1 Hz, einer Ausdehnung von 0,2 % und einer Aufwärmung von 5°C/min auf einem Muster einer Dicke von 800 µm gemessen wird.

Die Herstellung der Dichtmasse unterliegt keinen Beschränkungen. Die genannten Komponenten werden miteinander vorzugsweise bei einer Temperatur von 5 bis 100°C vermischt, wobei sich zum Vermischen alle gängigen Mischsysteme eignen, z.B. statische oder dynamische Mischer. Vorteilhafterweise werden Mischer mit programmierbarer Drehzahlregelung verwendet, so daß der Produktionsablauf festgelegt werden kann. Vorzugsweise werden Mischer mit hohen Umdrehungszahlen eingesetzt, wobei die genaue Umdrehungszahl von der Zusammensetzung der Dichtungsmasse abhängig ist. Wenn hochviskose Additive eingesetzt werden, ist es zweckmäßig, diese vor dem Vermischen zu erwärmen, um dadurch das Vermischen zu erleichtern. Die Vermischung erfolgt unter Vakuum, vorzugsweise bei einem Druck von 200 bis 80 mbar. Die erhaltene Paste wird dann in Kartuschen oder Kunststoffbeutel abgefüllt. Sie ist darin wenigstens ein Jahr haltbar.

Zur Anwendung wird die Dichtmasse mittels einer Preßpistole aus der Kartusche oder dem Kunststoffbeutel gepreßt. Die Dichtmasse trocknet dann durch Verdunstung des Wassers aus. Im Trockenzustand enthält die Dichtmasse 0 bis 20 Gew.-% Wasser, insbesondere 0 bis 10 Gew.-% Wasser, jeweils bezogen auf 100 Gew.-% der getrockneten Dichtmasse.

Die Dichtmasse kann in einem Temperaturbereich von 1 bis 60°C verarbeitet werden. Die bevorzugte Verarbeitungstemperatur beträgt 5 bis 50°C. Wenn tiefere Temperaturen gewünscht sind, können geeignete wasserlösliche Additive, wie sie oben beschrieben wurden, zur Verbesserung der Frostbeständigkeit zugesetzt werden. Im Trockenzustand erfüllt die Dichtmasse ihre Funktion in einem Temperaturbereich von -20 bis +80°C.

Die Dichtmasse wird zum Abdichten und/oder Anschließen von Materialien, insbesondere zum Anschließen von Materialien, verwendet. Da die Dichtmasse auf allen Materialien, z.B. Polyolefinen, Papieren, Vliesen, Polyamiden und Polyestern, außer silikonisierten und fluorisierten Oberflächen haftet, findet sie überall dort Verwendung, wo solche Materialien, insbesondere Polyolefin-Materialien, abzudichten sind, und insbesondere dort, wo keine freiliegenden Oberflächen vorliegen. Die Dichtmasse kann jedoch auch überall dort angewendet werden, wo es nicht stört, daß Schmutz hängen bleibt. Insbesondere finden die Dichtmassen Verwendung im Baubereich, bei Sockelleisten, bei, insbesondere Polyolefinhaltigen, Profilen oder im industriellen Sektor. Eine spezielle Anwendung im Baubereich ist im Dachbereich das Anschließen eines Polyolefin-Materials an einem festen Untergrund, z.B. einer gefärbten oder ungefärbten Wand aus Holz, Putz, Beton, Kalkstein oder Ziegelstein. Geeignete Polyolefin-Materialien sind z.B. Folien, Bahnen, Spritzgußteile, Fasern und Kabel.

Somit weisen bevorzugte erfindungsgemäße Dichtmassen die folgenden Merkmale und Vorteile auf:
- im wesentlichen VOC-frei, d.h. im wesentlichen lösungsmittelfrei und hochsiederfrei, damit auch geruchsarm;
- im Trockenzustand Schälhaftung auf polyolefinischen Materialien von wenigstens 5 N/25 mm (nach DIN EN 1939) bei sowohl 5°C als auch bei 23°C;
- im Trockenzustand bei -20 bis +80°C selbstklebend;
- alterungsbeständig, d.h. auch bei Alterung nimmt die Schälhaftung nicht unter 5 N/25 mm (DIN EN 1939) ab;
- Glasübergangstemperatur der Bindematrix unter 10°C; und
- mit einer Kartusche und Preßpistole verarbeitbar.

Somit wird erfindungsgemäß eine Dichtmasse bereitgestellt, die im wesentlichen VOC-frei ist und eine gute Haftung auf insbesondere Polyolefin-Materialien zeigt.

Die Erfindung wird anhand des folgenden Beispiels, das eine bevorzugte Ausführungsform der Erfindung darstellt, näher erläutert.

### Beispiel

60 Gewichtsteile einer Polyacrylatdispersion mit einer Glasübergangstemperatur T_{g} = -40°C, mit einer Schälhaftung für PO-Materialien von wenigstens 15 N/25 mm und mit einem Feststoffgehalt von 65 Gew.-%, wovon etwa 99,5 Gew.-% Polyacrylat und der Rest Emulgatoren sind, und mit 35 Gew.-% Wasser wird mit 6 Gewichtsteilen wasserlöslichem Additiv, nämlich 6 Gewichtsteilen Natriumsulfat, und den folgenden weiteren Additiven bei Raumtemperatur (23°C) und 100 mbar vermischt: 9 Gewichtsteile Harz, 7 Gewichtsteile Polyamidfasern, 13 Gewichtsteile Polyisobutylen, 1 Gewichtsteil Polyurethan-Verdicker, 2 Gewichtsteile Polyvinylalkohol-Verdicker, 0,3 Gewichtsteile UV-Stabilisator, 0,2 Gewichtsteile Biozid und 0,5 Gewichtsteile Tensid. Die Paste hat im Naßzustand eine Viskosität von etwa 370 Pa·s (nach Brookfield, Typ A, Spindel 7, 10 U/min) bei 23°C. Im Trockenzustand hat die erhaltene Masse einen Schubmodul G' von 5·10⁵ Pa bei - 25°C bis 5·10³ Pa bei 100°C und eine Schälhaftung auf Polyolefinmaterialien von 20 N/25 mm bei 23°C. Die getrocknete Dichtmasse ist selbstklebend, wobei bei Messung der Klebrigkeit der Oberfläche der Weg der laufenden Kugel etwa 7 cm betrug. Die Glasübergangstemperatur der Bindematrix beträgt -30°C. Hierbei wurden alle Messungen gemäß den oben beschriebenen Bestimmungsmethoden durchgeführt.

## Patentansprüche

1. Einkomponentige Dichtmasse auf Basis einer Dispersion von Polyacrylaten in einem wässrigen Medium, wobei die Dichtmasse im Nasszustand 0 bis 10 Gewichtsteile, auf 100 Gewichtsteile Dichtmasse, flüchtige organische Verbindungen (VOC) aufweist, und im Trockenzustand eine selbstklebende Eigenschaft aufweist, bei der der Weg einer laufenden Kugel bei Messung gemäß "Test Methods for Pressure-Sensitive Adhesives, 6^{th} Edition, Pressure sensitive tape counsel, Itasca III" weniger als 30 cm beträgt.

2. Dichtmasse nach Anspruch 1, **dadurch gekennzeichnet, dass** sie im Trockenzustand eine Schälhaftung von wenigstens 5 N/25 mm bei sowohl 5°C als auch 23°C und bevorzugt zwischen 5 und 50° C auf Polyolefin-Materialien, gemessen nach DIN EN 1939, hat.

3. Dichtmasse nach Anspruch 1 oder 2, **dadurch gekennzeichnet, dass** sie im Trockenzustand ein Schubmodul G' im Bereich von 5 · 10⁵ Pa bis 5 · 10³ Pa bei 25° C, von weniger als 5 · 10⁵ Pa bei Temperaturen tiefer als -10° C und von mehr als 5 ·10³ Pa bei Temperaturen höher als 60° C hat.

4. Dichtmasse nach einem der Ansprüche 1 bis 3, **dadurch gekennzeichnet, dass** sie im Trockenzustand aus wenigstens einer Phase besteht, deren Glasübergangstemperatur T_{g} unter 10° C liegt.

5. Dichtmasse nach einem der vorhergehenden Ansprüche, **dadurch gekennzeichnet, dass** sie im Nasszustand, jeweils bezogen auf 100 Gewichtsteile Dichtmasse, mit bis zu 80 Gewichtsteilen Additiven modifiziert ist, wobei die Additive weniger als etwa 3 Gewichtsteile flüchtige organische Verbindungen (VOC) umfassen.

6. Dichtmasse nach einem der vorhergehenden Ansprüche, **dadurch gekennzeichnet, dass** sie im Nasszustand eine Viskosität von wenigstens 50 Pa · s bei 23° C hat.

7. Dichtmasse nach einem der vorhergehenden Ansprüche, **dadurch gekennzeichnet, dass** die Polyacrylate Acrylat- und/oder Methacrylat-Monomere enthalten.

8. Dichtmasse nach einem der vorhergehenden Ansprüche, gekennzeichnet im Nasszustand durch einen Gehalt an Polyacrylaten von 15 bis 90 Gew.%, bezogen auf 100 Gew.% Dichtmasse.

9. Dichtmasse nach einem der vorhergehenden Ansprüche, gekennzeichnet im Nasszustand durch einen Gehalt an Polyacrylaten von 25 bis 80 Gew.%, bezogen auf 100 Gew.% Dichtmasse.

10. Dichtmasse nach einem der Ansprüche 5 bis 9, **dadurch gekennzeichnet, dass** die Additive wenigstens eine Verbindung ausgewählt aus wasserlöslichen Verbindungen, anorganischen Füllstoffen, organischen Füllstoffen, Vemetzem, Haftvermittlern, Stabilisatoren, Entschäumern, Tensiden, Trocknungsadditiven umfassen.

11. Dichtmasse nach Anspruch 10, **dadurch gekennzeichnet, dass** die wasserlöslichen Verbindungen wenigstens eine Verbindung ausgewählt aus Natriumchlorid, Kaliumchlorid, Calciumchlorid, Natriumsulfat, Methanol, Ethanol, Propanol, Aceton, Ethylglykol und Propylenglykol umfassen.

12. Dichtmasse nach einem der vorhergehenden Ansprüche, **dadurch gekennzeichnet, dass** sie eine selbstklebende Eigenschaft aufweist, bei der der Weg der laufenden Kugel weniger als 20 cm beträgt.

13. Dichtmasse nach einem der vorhergehenden Ansprüche, **dadurch gekennzeichnet, dass** sie in einer Kartusche oder einem Kunststoffbeutel enthalten ist.

14. Dichtmasse nach Anspruch 13, **dadurch gekennzeichnet, dass** sie mit einer Presspistole verarbeitbar ist.

15. Verwendung einer Dichtmasse nach einem der Ansprüche 1 bis 14 zum Abdichten und/oder Anschließen von Materialien.

16. Verwendung nach Anspruch 15, wobei wenigstens ein Material ein Polyolefin-Material ist.

17. Verfahren zur Herstellung einer Dichtmasse nach einem der Ansprüche 1 bis 14, **dadurch gekennzeichnet, dass** die Komponenten der Dichtmasse unter Vakuum miteinander vermischt werden.

18. System, bestehend aus einem Material, das im Baubereich im Dachbereich anzuschließen und/oder abzudichten ist, und aus einer einkomponentigen Dichtmasse gemäß einem der Ansprüche 1 bis 14.

19. System nach Anspruch 18, **dadurch gekennzeichnet, dass** das Material ein Polyolefin-Material ist.

20. System nach Anspruch 18, **dadurch gekennzeichnet, dass** das Material ein Polyamid-Material ist.

21. System nach Anspruch 18, **dadurch gekennzeichnet, dass** das Material ein Polyester-Material ist.

22. System nach Anspruch 18, **dadurch gekennzeichnet, dass** das Material ein Vlies-Material ist.

23. System nach Anspruch 18, **dadurch gekennzeichnet, dass** das Material ein Papier-Material ist.

24. System nach einem der Ansprüche 18 bis 23, **dadurch gekennzeichnet, dass** das Material eine Folie ist.

## Claims

1. A one-component sealant based on a dispersion of polyacrylates in an aqueous medium, wherein the sealant in the wet state contains from 0 to 10 parts by weight of volatile organic compounds (VOCs), based on 100 parts by weight of sealant, and in the dry state is self-adhesive, with the path of a rolling ball being less than 30 cm in accordance with "Test Methods for Pressure-Sensitive Adhesives, 6^{th} edition, Pressure sensitive tape council, Itasca III".

2. The sealant of claim 1, **characterized in that** in the dry state it has a peel adhesion when determined in accordance with DIN EN 1939 of at least 5 N/25 mm at both 5 °C and 23 °C, and preferably at between 5 and 50 °C, on polyolefin materials.

3. The sealant of claim 1 or 2, **characterized in that** in the dry state it has a shear modulus G' in the range from 5·10⁵ Pa to 5·10³ Pa at 25 °C, of less than 5·10⁵ Pa at temperatures lower than -10 °C, and of more than 5·10³ Pa at temperatures higher than 60 °C.

4. The sealant of any of claims 1 to 3, **characterized in that** in the dry state it is composed of at least one phase whose glass transition temperature, Tg, is below 10 °C.

5. The sealant of any of the preceding claims, **characterized in that** in the wet state, based in each case on 100 parts by weight of sealant, it is modified with up to 80 parts by weight of additives, the additives containing less than about 3 parts by weight of volatile organic compounds (VOCs).

6. The sealant of any of the preceding claims, **characterized in that** in the wet state it has a viscosity of at least 50 Pa·s at 23 °C.

7. The sealant of any of the preceding claims, **characterized in that** the polyacrylates contain acrylate and/or methacrylate monomers.

8. The sealant of any of the preceding claims, **characterized in** the wet state by a polyacrylate content of from 15 to 90 % by weight, based on 100 % by weight of sealant.

9. The sealant of any of the preceding claims, **characterized in** the wet state by a polyacrylate content of from 25 to 80 % by weight, based on 100 % by weight of sealant.

10. The sealant of any of claims 5 to 9, **characterized in that** the additives comprise at least one compound selected from water-soluble compounds, inorganic fillers, organic fillers, crosslinkers, adhesion promoters, stabilizers, defoamers, surfactants, drying additives.

11. The sealant of claim 10, **characterized in that** the water-soluble compounds comprise at least one compound selected from sodium chloride, potassium chloride, calcium chloride, sodium sulfate, methanol, ethanol, propanol, acetone, ethyl glycol and propylene glycol.

12. The sealant of any of the preceding claims, **characterized in that** it has a self-adhesive property, wherein the path of the rolling ball is less than 20 cm.

13. The sealant of any of the preceding claims, **characterized in that** it is present in a cartridge or a plastic bag.

14. The sealant of claim 13, **characterized in that** it can be processed with a press gun.

15. Use of a sealant according to any of claims 1 to 14 for sealing and/or connecting materials.

16. The use according to claim 15, wherein at least one material is a polyolefin material.

17. A process for preparing a sealant according to any of claims 1 to 14, **characterized in that** the components of the sealant are mixed with one another under vacuum.

18. System consisting of a material to be connected and/or to be sealed in the construction sector in the roof area, and a one-component sealant according to any of claims 1 to 14.

19. The system of claim 18, **characterized in that** the material is a polyolefin material.

20. The system of claim 18, **characterized in that** the material is a polyamide material.

21. The system of claim 18, **characterized in that** the material is a polyester material.

22. The system of claim 18, **characterized in that** the material is a non-woven material.

23. The system of claim 18, **characterized in that** the material is a paper material.

24. The system of any of claims 18 to 23, **characterized in that** the material is a film.

## Revendications

1. Composition d'étanchéité à un composant à base d'une dispersion de polyacrylates dans un milieu aqueux, la composition d'étanchéité contenant à l'état humide de 0 à 10 parties en poids, pour 100 parties en poids de la composition d'étanchéité, de composés organiques volatils (COV), et, à l'état sec, présente une propriété autocol-lante, pour laquelle le trajet d'une bille roulante, la mesure étant effectuée conformément aux "Test Methods for Pressure-Sensitive Adhesives, 6ème édition, Pressure Sen-sitive Tape Counsel, Itasca III", est inférieur à 30 cm.

2. Composition d'étanchéité selon la revendication 1, **caractérisée en ce que**, à l'état sec, elle a une résis-tance au décollement, mesurée selon DIN EN 1939, d'au moins 5 N/25 mm tant à 5°C qu'à 23°C, et de préférence entre 5 et 50°C sur des matériaux polyoléfiniques.

3. Composition d'étanchéité selon la revendication 1 ou 2, **caractérisée en ce qu'**elle présente à l'état sec un module de glissement G' compris entre 5.10⁵ Pa et 5.10³ Pa à 25°C, inférieur à 5.10⁵ Pa à des températures inférieures à -10°C, et supérieur à 5.10³ Pa à des températures supérieures à 60°C.

4. Composition d'étanchéité selon l'une des revendications 1 à 3, **caractérisée en ce que**, à l'état sec, elle est constituée d'au moins une phase dont la température de transition vitreuse T_{g} est inférieure à 10°C.

5. Composition d'étanchéité selon l'une des revendi-cations précédentes, **caractérisée en ce que**, à l'état humide, elle est modifiée par une quantité d'additifs allant jusqu'à 80 parties en poids, dans tous les cas pour 100 parties en poids de la composition d'étanchéité, les additifs comprenant moins d'environ 3 parties en poids de composés organiques volatils (COV).

6. Composition d'étanchéité selon l'une des revendi-cations précédentes, **caractérisée en ce que**, à l'état humide, elle a une viscosité d'au moins 50 Pa.s à 23°C.

7. Composition d'étanchéité selon l'une des revendi-cations précédentes,
**caractérisée en ce que** les polyacry-lates contiennent des acrylates et/ou des méthacrylates monomères.

8. Composition d'étanchéité selon l'une des revendi-cations précédentes, **caractérisée en ce que**, à l'état humide, elle contient de 15 à 90 % en poids de polyacry-lates, pour 100 parties en poids de la composition d'étanchéité.

9. Composition d'étanchéité selon l'une des revendi-cations précédentes, **caractérisée en ce que**, à l'état humide, elle a une teneur en polyacrylates de 25 à 80 % en poids pour 100 parties en poids de la composition d'étanchéité.

10. Composition d'étanchéité selon l'une des reven-dications 5 à 9, **caractérisée en ce que** les additifs com-prennent au moins un composé choisi parmi des composés solubles dans l'eau, des charges inorganiques, des charges organiques, des agents de réticulation, des tiers-solvants, des stabilisants, des antimousses, des tensioactifs, des additifs déshydratants.

11. Composition d'étanchéité selon la revendication 10, **caractérisée en ce que** les composés solubles dans l'eau comprennent au moins un composé choisi parmi le chlorure de sodium, le chlorure de potassium, le chlorure de calcium, le sulfate de sodium, le méthanol, l'éthanol, le propanol, l'acétone, l'éthylglycol et le propylène-glycol.

12. Composition d'étanchéité selon l'une des reven-dications précédentes, **caractérisée en ce qu'**elle présente une propriété autocollante, pour laquelle le trajet de la bille roulante est inférieur à 20 cm.

13. Composition d'étanchéité selon l'une des reven-dications précédentes, **caractérisée en ce qu'**elle est contenue dans une cartouche ou dans un sachet en matière plastique.

14. Composition d'étanchéité selon la revendication 13, **caractérisée en ce qu'**elle peut être mise en oeuvre avec un pistolet presseur.

15. Utilisation d'une composition d'étanchéité selon l'une des revendications 1 à 14 pour l'étanchéification et/ou le jointoiement de matériaux.

16. Utilisation selon la revendication 15, pour laquelle au moins un matériau est un matériau polyoléfi-nique.

17. Procédé de fabrication d'une composition d'étan-chéité selon l'une des revendications 1 à 14, **caractérisé en ce que** l'on mélange sous vide les uns aux autres les composants de la masse d'étanchéité.

18. Système constitué d'un matériau destiné à être jointoyé et/ou étanchéifié dans la zone de toit dans le domaine de la construction, et d'une composition d'étan-chéité à un composant selon l'une des revendications 1 à 14.

19. Système selon la revendication 18, **caractérisé en ce que** le matériau est un matériau polyoléfinique.

20. Système selon la revendication 18, **caractérisé en ce que** le matériau est un matériau de polyamide.

21. Système selon la revendication 18, **caractérisé en ce que** le matériau est un matériau polyester.

22. Système selon la revendication 18, **caractérisé en ce que** le matériau est un matériau non tissé.

23. Système selon la revendication 18, **caractérisé en ce que** le matériau est un matériau de papier.

24. Système selon l'une des revendications 18 à 23, **caractérisé en ce que** le matériau est une feuille.
